# EUROPÄISCHE PATENTSCHRIFT

(11) **EP 3 658 799 B1**
(45) Veröffentlichungstag und Bekanntmachung des Hinweises auf die Patenterteilung: **13.10.2021**
(21) Anmeldenummer: 18768792.6
(22) Anmeldetag: 30.08.2018
(51) Int. Cl.: F16H 59/10, F16H 61/24

(54) **SCHALTVORRICHTUNG MIT MAGNETISCHER RASTIERUNG**
SHIFTING DEVICE WITH A MAGNETIC LOCKING MECHANISM
DISPOSITIF DE COMMUTATION COMPRENANT UN ENCLIQUETAGE MAGNÉTIQUE

(30) Priorität: 31.08.2017 DE 102017120076
(43) Veröffentlichungstag der Anmeldung: 03.06.2020
(73) Patentinhaber: Küster Holding GmbH, 35630 Ehringshausen (DE)
(72) Erfinder: BARDARÉ, Luca, 35085 Ebsdorfergrund (DE)
(74) Vertreter: Müller, Eckhard
(86) Internationale Anmeldenummer: PCT/EP2018/073364
(87) Internationale Veröffentlichungsnummer: WO 2019/043107

(56) Entgegenhaltungen:
- DE-A1-102007 058 001
- DE-A1-102010 029 817
- DE-A1-102012 222 237
- JP-U- H02 105 651

## Beschreibung

Die Erfindung betrifft eine Schaltvorrichtung nach dem Oberbegriff des Anspruchs 1, insbesondere eine Shift-By-Wire-Schaltvorrichtung zur Erzeugung eines Fahrstufenwechselsignals.

Aus dem Stand der Technik sind verschiedene Schaltvorrichtungen bekannt, mittels welcher ein Fahrzeugführer unterschiedliche Fahrstufen des Fahrzeugs vorgeben kann. Beispielsweise kann der Fahrer zwischen der Fahrstufe für die Vorwärtsfahrt (D) und der Fahrstufe für die Rückwärtsfahrt umschalten. Da der Fahrzeugführer seine Aufmerksamkeit während des Fahrbetriebs im Wesentlichen auf das sichere Führen des Fahrzeugs zu richten hat, muss eine Schaltvorrichtung besonders einfach bedienbar sein. Durchgesetzt haben sich überwiegend Schaltvorrichtungen, bei welchen der Fahrzeugführer ein Betätigungselement, beispielsweise einen Schalthebel, ergreift und zwischen unterschiedlichen Schaltpositionen innerhalb einer Schaltgasse oder Schaltkulisse hin- und herführt. Um dem Fahrzeugführer eine unmittelbare Rückmeldung über die eingelegte Fahrstufe bzw. das Erreichen der gewünschten Fahrstufe zu signalisieren, geben die Schaltvorrichtungen eine haptische Rückmeldung in Form einer veränderlichen Rückstell- bzw. Widerstandskraft. Bei mechanischen Wechselgetrieben wird diese Variation der Betätigungskraft bereits durch die mechanischen Gegebenheiten in dem Getriebe erreicht. Bei Schaltvorrichtungen, die nicht mechanisch mit einem Getriebe oder einem Antriebsstrang des Kraftfahrzeugs gekoppelt sind, wird die Rückstellkraft teilweise künstlich erzeugt.

Die DE 10 2014 110 147 A1 betrifft eine Rastiervorrichtung, insbesondere für Schaltvorrichtungen zur Betätigung von Getrieben in Kraftfahrzeugen, mit einem Rastier- und Gegenrastelement, wobei das Rastierelement und das Gegenrastelement zwischen wenigstens einer Rast- und Entraststellung relativ zueinander bewegbar sind und das Gegenrastelement mindestens ein elastisch verformbares Dämpfungselement aufweist, mit welchem das Rastierelement in einer Raststellung in Wirkkontakt steht. Nachteilig bei einer solchen Vorrichtung ist die mit dem Wechsel der Schaltposition verbundene Geräuschentwicklung, zu deren Verringerung oder Vermeidung das Dämpfungselement verbaut wird. Das Dämpfungselement muss zur Erreichung der gewünschten Geräuschdämpfung aus einer Weichkomponente bestehen, bei welcher es aber alterungsbedingt zu einer unerwünschten Änderung ihres Dämpfungsverhaltens und somit zu einer Änderung der Geräuschcharakteristik der gesamten Schaltvorrichtung kommen kann.

Aus der EP 2 161 643 A2 ist eine Bedieneinrichtung, beispielsweise ein Potentiometer, bekannt, mit einem bewegbaren Bedienelement, das mindestens einen Permanentmagneten enthält, der bei der Bedienung der Bedieneinrichtung längs eines Weges bewegt wird. Parallel zu diesem Bewegungsweg des Magneten sind auf einem Träger eine Vielzahl von hintereinander angeordneten Gegenelementen aus ferromagnetischem Material angeordnet. Diese Gegenelemente sind insbesondere als Ferritpaste auf dem Träger im Siebdruckverfahren aufgedruckt. Dadurch wird eine Rastung der Bedieneinrichtung ohne mechanisch wirkende Teile erreicht. Die Haptik der Bewegung lässt sich durch unterschiedliche Größen, Dicken, Formen oder Zwischenräume zwischen den Gegenelementen beeinflussen.

Aus der DE 10 2007 058 001 A1 ist eine Steuervorrichtung eines Schaltgetriebes für ein Kraftfahrzeug bekannt, mit einem schwenkbar an einem festen Träger angebrachten Steuerknüppel und Dauermagneten, die auf mit dem Steuerknüppel verbundenen oder durch den Steuerknüppel verschiebbaren Elementen angebracht sind. Die Dauermagnete wirken per magnetischer Anziehungskraft oder Abstoßung mit Dauermagneten zusammen, die auf dem festen Träger entlang der Bewegungsbahnen angebracht sind, die von den vom Steuerknüppel verschobenen Dauermagneten durchlaufen werden, um auf diese Weise stabile Positionen des Steuerknüppels zu definieren als auch Druckkräfte, die auf den Steuerknüppel zwischen den stabilen Positionen wirken, und Kräfte, die auf das Zurückholen des Steuerknüppels in seine stabilen Positionen wirken.

Aus der JP H02 105651 U ist eine magnetische Schaltvorrichtung zum Anwählen unterschiedlicher Fahrstufen eines Kraftfahrzeugs bekannt.

Die DE 10 2012 222 237 A1 betrifft ein Bedienelement mit einem um eine erste Schwenkachse schwenkbar gelagerten Betätigungshebel und mit einem um eine Mitnehmerschwenkachse entlang einer Schwenkrichtung schwenkbar gelagerten Mitnehmerhebel, an welchem ein erster Magnet angeordnet ist. Mehrere ruhende, zweite Magnete sind derart angeordnet, dass beim Schwenken des Mitnehmerhebels der erste Magnet die Magnetfelder der zweiten Magnete durchquert, um eine haptische Rückmeldung am Betätigungshebel zu erzeugen.

Die DE 10 2010 029 817 A1 betrifft ein Bedienelement für eine wenigstens zwei Schalt- oder Regelstufen aufweisende Schalt- und/oder Regelfunktionalität mit einem händisch betätigbaren und damit aus einer Ruhestellung bewegbares Betätigungsteil und mit wenigstens drei Permanentmagneten. Ein erster, bewegbarer Permanentmagnet wird in seinem Bewegungsbereich von dem Betätigungsteil synchron angetrieben. Ein zweiter, bewegbarer Permanentmagnet wird durch Magnetkraft in einem ersten Teilbereich des Bewegungsbereichs des ersten Permanentmagneten synchron von diesem mitgenommenen und dessen weitergehende Bewegung ist in wenigstens einem zweiten Teilbereich des Bewegungsbereichs des ersten Permanentmagneten durch wenigstens einen Anschlag unterbunden. Ein dritter, gegenüber dem Betätigungsteil ruhender Permanentmagnet dient zur Erzeugung einer magnetischen Rückstellkraft auf wenigstens den ersten Permanentmagneten.

Ausgehend von den zuvor beschriebenen Nachteilen liegt der Erfindung die Aufgabe zugrunde, die gattungsgemäße Schaltvorrichtung in ihrem Aufbau zu vereinfachen und gleichzeitig eine im Wesentlichen gleichbleibende Geräuschcharakteristik zu erreichen.

Diese Aufgabe wird gelöst mit einer Schaltvorrichtung nach Anspruch 1. Weiterbildungen der Erfindung ergeben sich aus den abhängigen Ansprüchen.

Die Schaltvorrichtung ist insbesondere eine sogenannte "Shift-By-Wire"-Schaltvorrichtung zum Erzeugen eines Fahrstufenwechselsignals, das zum Anwählen unterschiedlicher Fahrstufen eines Kraftfahrzeugs ausgebildet ist. Die Schaltvorrichtung weist ein Betätigungselement auf, das in wenigstens einer Betätigungsrichtung entlang wenigstens einer Schaltgasse zwischen wenigstens zwei, den Fahrstufen zugeordneten Schaltpositionen beweglich geführt ist. Das Betätigungselement ist mit einer Haptikeinrichtung gekoppelt, mittels welcher eine auf das Betätigungselement wirkende Rückstellkraft erzeugbar ist, die einer auf das Betätigungselement wirkenden Betätigungskraft durch einen Benutzer zumindest zeitweise entgegengerichtet ist. Die erfindungsgemäße Schaltvorrichtung zeichnet sich dadurch aus, dass die Haptikeinrichtung wenigstens einen ersten Magneten und wenigstens ein mit dem ersten Magneten magnetisch koppelbares erstes Gegenelement aufweist, wobei der wenigstens eine erste Magnet und das wenigstens eine erste Gegenelement relativ zueinander beweglich sind.

Durch den Wegfall der mechanischen Kopplung kann ein mechanischer Verschleiß in der Haptikeinrichtung nahezu vermieden werden. Dadurch bleiben die Geräuschcharakteristik und auch die Haptik über die Lebensdauer der Schaltvorrichtung nahezu gleich. Der Magnet kann zusätzlich auch zum Erfassen der Stellung des Betätigungselementes genutzt werden.

In Weiterbildung der Erfindung kann vorgesehen sein, dass das erste Gegenelement für die magnetische Kopplung mit dem ersten Magneten ebenfalls als Magnet ausgebildet ist. Es kann auch vorgesehen sein, dass das erste Gegenelement als Rastierkontur mit ferromagnetischen Eigenschaften ausgebildet ist. Bei einer solchen magnetischen Rastierkontur wird die Haptik im Gegensatz zu Konturen, bei welchen die Haptik mechanisch umgesetzt wird, rein magnetisch und somit verschleißfrei umgesetzt. Gegenüberliegende Magnete bzw. Elemente mit ferromagnetischen Eigenschaften können sowohl Anziehungs- als auch Abstoßungskräfte hervorrufen, so dass nicht nur eine zuverlässiges Halten der eingelegten Schaltposition, sondern auch ein magnetisch unterstützter Wechsel der Schaltpositionen gewährleistet werden kann. Auf diese Weise lässt sich eine mechanische "Haptik" besser nachempfinden.

Dabei kann zusätzlich vorgesehen sein, dass sich in einer Schaltposition jeweils wenigstens ein Nordpol bzw. Südpol des ersten Magneten und ein Südpol bzw. Nordpol des als Magneten ausgebildeten ersten Gegenelements gegenüberliegen. Hierdurch lässt sich die Haltekraft verstärken, und der jeweilige Magnet kann schwächer oder kleiner ausgelegt werden.

Alternativ kann vorgesehen sein, dass sich in einer Schaltposition der Nordpol des ersten Magneten und der Südpol eines als Magneten ausgebildeten ersten Gegenelements und der Südpol des ersten Magneten und der Nordpol eines als Magneten ausgebildeten ersten Gegenelements gegenüberliegen. Auf diese Weise ist es möglich, Schaltpositionen zu definieren, die zwischen einzelnen Magneten des Gegenelementes liegen.

Bevorzugt kann vorgesehen sein, den oder die erste bzw. ersten Magneten wenigstens teilweise als Permanentmagneten oder -magnete auszubilden. Auf eine externe Energiezufuhr zum Aufbau der Haptik-Kräfte kann auf diese Weise verzichtet werden. Es ist auch denkbar, den oder die Magnete als Elektromagnete auszubilden oder lediglich einige Magnete als Permanentmagnete auszugestalten, welche mit entsprechenden Elektromagneten wechselwirken.

Besonders vorteilhat ist es zu dem, wenn die Schaltvorrichtung so ausgebildet ist, dass jeder Schaltposition wenigstens eine Fahrstufe oder ein Fahrstufenwechsel des Kraftfahrzeugs zugeordnet ist und Mittel zur elektrischen Kopplung mit einem Kraftfahrzeuggetriebe und/oder einer Kraftfahrzeugsteuerung, insbesondere einen elektrischen Signalerzeuger zur elektrischen Kopplung vorgesehen sind. Die Schaltvorrichtung kann auf diese Weise mit der Fahrzeugsteuerung oder dem Fahrzeuggetriebe gekoppelt werden. Bei Elektrofahrzeugen kann der Wechsel einer Fahrstufe mit einer Drehrichtungsumkehr des Antriebsmotors verknüpft sein.

Von Vorteil ist auch, wenn die Schaltvorrichtung eine mit dem ersten Magneten oder dem als Rastierkontur ausgebildeten ersten Gegenelement zusammenwirkende Sensorik beispielsweise einen Magnetfeldsensor aufweist, mittels welchem wenigstens eine eingelegte Schaltposition ermittelbar ist. Die den unterschiedlichen Schaltpositionen zugeordneten Magnetfelder bzw. ein bei Einlegung einer bestimmten Fahrstufe in den Sensorbereich des Magnetfeldsensors eintretendes Magnetfeld kann zur Erzeugung des Steuersignals bzw. Fahrstufenwechselsignals verwendet werden, mittels welchem ein Fahrstufenwechsel hervorgerufen werden soll. Auf diese Weise kann der wenigstens eine erste Magnet in zweifacher Weise, also zur Erzeugung der haptischen Kräfte und gleichzeitig zur Positionserfassung des Betätigungselementes genutzt werden.

Dabei ist es möglich, dass der Magnetfeldsensor mit dem Betätigungselement gekoppelt, insbesondere daran befestigt ist. Auf diese Weise können alle Schaltpositionen des Betätigungselementes mit nur einem Sensor aufgenommen und ausgewertet werden. Alternativ dazu ist es möglich, eine Sensoranordnung an einem Teil der Schaltvorrichtung, insbesondere an einem feststehenden bzw. ortfesten Teil bezüglich des Betätigungselementes vorzusehen.

In einer Variante der Erfindung kann das Betätigungselement linear oder verschwenkbar bewegbar, insbesondere als ein entlang der Schaltgasse linear geführter Schieber, bspw. als sogenannter Bedienstein, oder als ein schwenkbar geführter Schalthebel ausgebildet sein. Diese Ausgestaltungen haben sich als besonders leicht und intuitiv bedienbar herausgestellt.

Erfindungsgemäß ist eine Rückstelleinrichtung, insbesondere wenigstens eine Rückstellfeder, zum selbsttätigen Rückstellen des Betätigungselementes in eine Schaltposition vorgesehen. Die Rückstelleinrichtung kann das Betätigungselement selbsttätig in eine andere, stabile Schaltposition überführen. Derartige Schalteinrichtungen sind seit einigen Jahren beliebt. In Weiterbildung dessen kann die Schaltvorrichtung auch derart ausgebildet sein, dass die Rückstelleinrichtung zum Rückstellen des Betätigungselementes in eine monostabile Schaltposition vorgesehen ist.

Erfindungsgemäß weist die Rückstelleinrichtung zweite Magnete, insbesondere Permanentmagnete oder Elektromagnete, und wenigstens ein mit den zweiten Magneten magnetisch koppelbares zweites Gegenelement zum selbsttätigen Rückstellen des Betätigungselementes in eine Schaltposition auf.

Gemäß der Erfindung ist wenigstens ein erster und ein zweiter Satz von jeweils in Montagestellung im Wesentlichen nebeneinander angeordneten zweiten Magneten vorgesehen, wobei der erste und zweite Satz in Montagestellung übereinander angeordnet sind und die Magnetfelder der beiden Sätze derart miteinander wechselwirken, dass der eine Satz gegenüber dem anderen Satz zum selbsttätigen Rückstellen des Betätigungselementes in eine Schaltposition magnetisch verschiebbar ist.

Es kann darüber hinaus jeweils eine Aufnahme für die zweiten Magnete bzw. den ersten und zweiten Satz von Magneten vorgesehen sein, so dass die Herstellung und Montage der magnetischen Rückstelleinrichtung weiter vereinfacht wird. Denn die mit Magneten bestückte Aufnahme kann bereits vormontiert werden. Ferner können auf einfache Weise die Magnetfelder durch das Vorsehen wenigstens einer ferromagnetische Eigenschaften aufweisenden Platte, insbesondere einer Stahlplatte, auf einfache Weise verstärkt werden. Diese Platten können zur Verstärkung des Magnetfeldes des ersten und/oder des zweiten Satzes von Magneten vorgesehen sein. Die magnetische Rückstelleinrichtung kann ausgebildet sein, indem in Montagestellung der erste Satz auf einer ersten Platte zur Verstärkung angeordnet ist, wobei der erste Satz in einer ersten Aufnahme zur Bildung einer ersten Unterbaugruppe gehalten ist. Der zweite Satz kann mit zweiter Platte in einer zweiten Aufnahme gehalten sein und eine zweite Unterbaugruppe bilden, wobei beide Unterbaugruppen übereinander in Sandwichbauweise angeordnet sein können.

Alternativ dazu kann die Haptikeinrichtung auch so ausgebildet sein, dass das Betätigungselement mittels magnetischer Anziehungskraft in der eingelegten Schaltposition gehalten wird. Bei dieser Variante erfüllt die Haptikeinrichtung eine Doppelfunktion in der Weise, dass nicht nur die an den Benutzer rückgemeldeten Betätigungswiderstände erzeugt werden, sondern das Betätigungselement auch in der eingelegten Stellung gehalten wird. Hierbei kann der Benutzer durch Ergreifen des Betätigungselementes eine unmittelbare Rückmeldung über die aktuell eingelegte Fahrstufe erhalten.

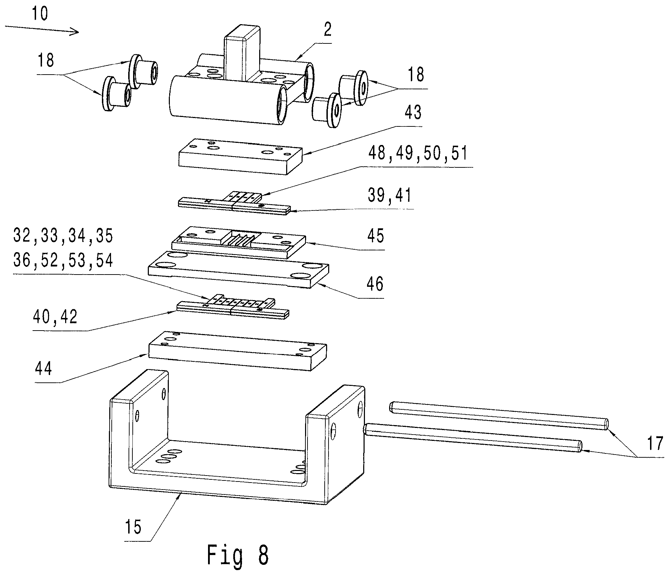

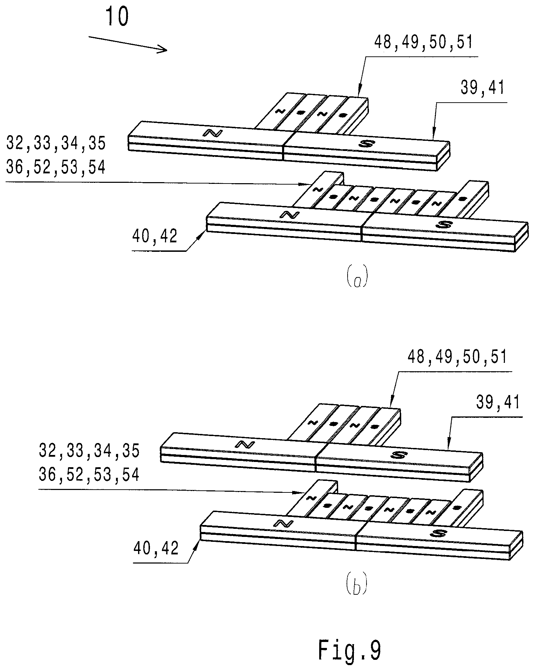

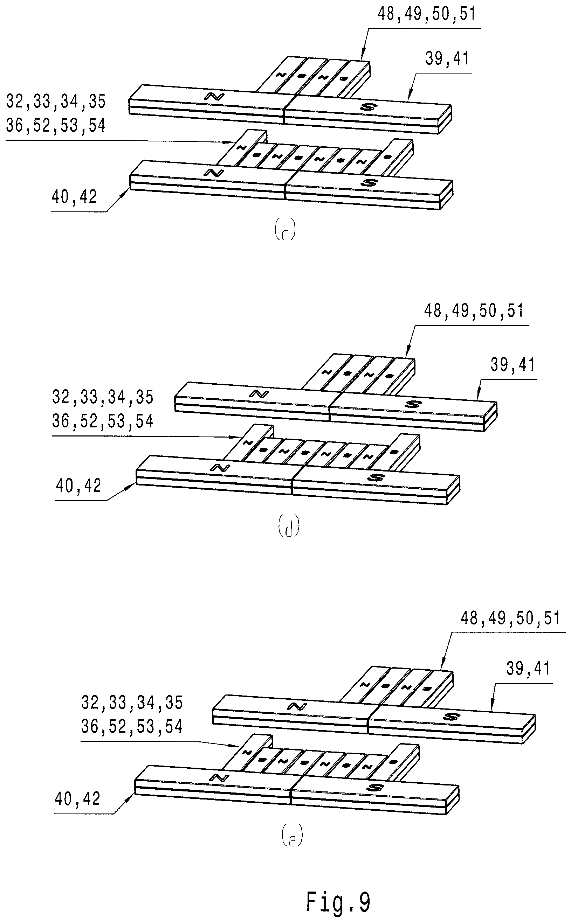

Die Erfindung kann ferner vorsehen, dass der erste Magnet an dem Betätigungselement angeordnet ist und eine Anordnung aus ersten Gegenelementen oder ersten Magneten in einem gegenüber dem Betätigungselement feststehenden Teil der Schaltvorrichtung angeordnet ist, oder alternativ, dass das erste Gegenelement an dem Betätigungselement angeordnet ist und eine Anordnung aus ersten Magneten in einem gegenüber dem Betätigungselement feststehenden Teil der Schaltvorrichtung angeordnet ist. Diese Varianten sind die besonders bevorzugten Ausgestaltungen. Weitere Ziele, Vorteile, Merkmale und Anwendungsmöglichkeiten der vorliegenden Erfindung ergeben sich aus der nachfolgenden Beschreibung von Ausführungsbeispiele anhand der Zeichnung, wobei lediglich die Figuren 8 und 9 eine Schaltvorrichtung gem. der vorliegenden Erfindung zeigen.

Dabei zeigen zum Teil schematisch:
- Figur 1: eine Perspektivansicht einer Schaltvorrichtung gemäß eines ersten Ausführungsbeispiels,
- Figur 2: eine Schnittansicht entlang der Schnittlinie A-A in Figur 4,
- Figur 3: eine Schnittansicht entlang der Schnittlinie C-C in Figur 4,
- Figur 4: eine Seitenansicht auf die Schaltvorrichtung gemäß Figur 1,
- Figur 5: eine Schnittansicht entlang der Schnittlinie B-B in Figur 4,
- Figur 6: eine Perspektivansicht einer Schaltvorrichtung gemäß eines zweiten Ausführungsbeispiels,
- Figur 7: eine Explosionsansicht der Schaltvorrichtung gemäß eines dritten Ausführungsbeispiels,
- Figur 8: eine Explosionsansicht der erfindungsgemäßen Schaltvorrichtung,
- Figur 9: eine perspektivische Detailansicht der Schaltvorrichtung gemäß Figur 8 in verschiedenen Positionen a) bis e) und
- Figur 10: eine Explosionsansicht der Schaltvorrichtung gemäß eines weiteren Ausführungsbeispiels.

Gleiche oder gleichwirkende Bauteile werden in den nachfolgend dargestellten Figuren der Zeichnung anhand einer Ausführungsform mit gleichen Bezugszeichen versehen, um die Lesbarkeit zu verbessern.

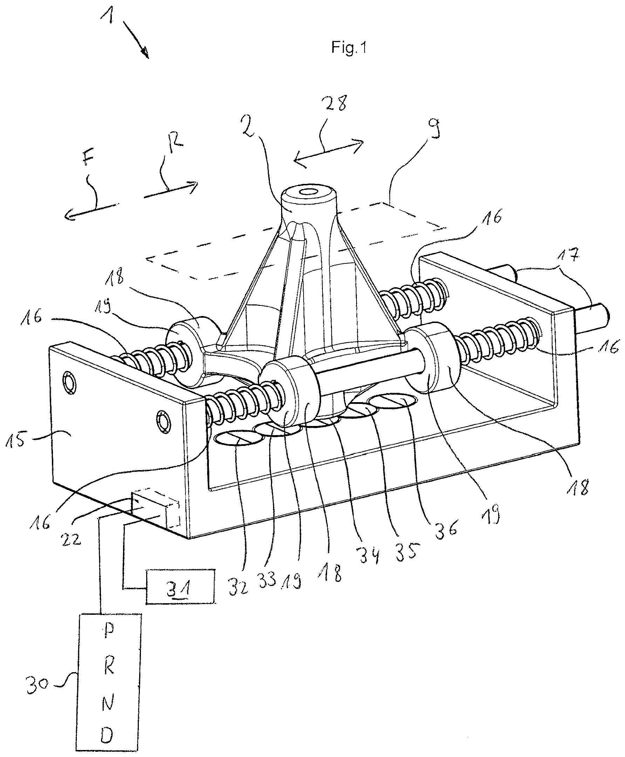

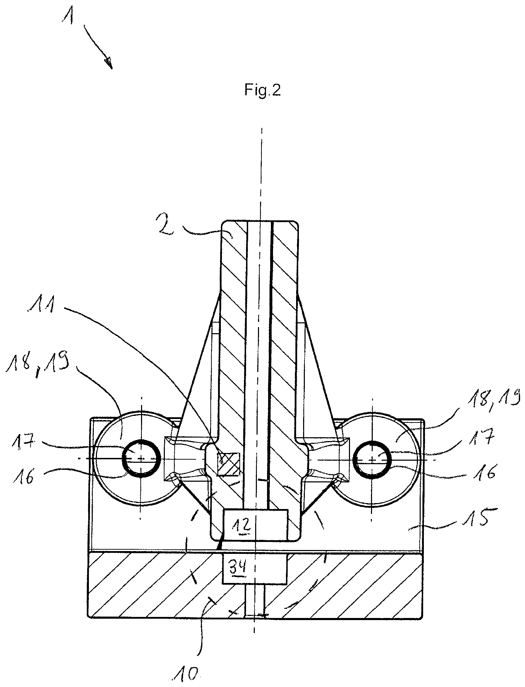

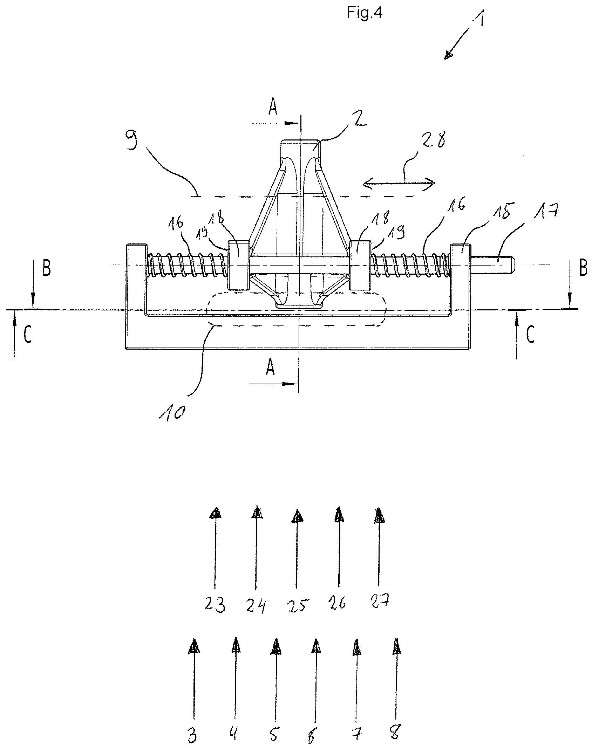

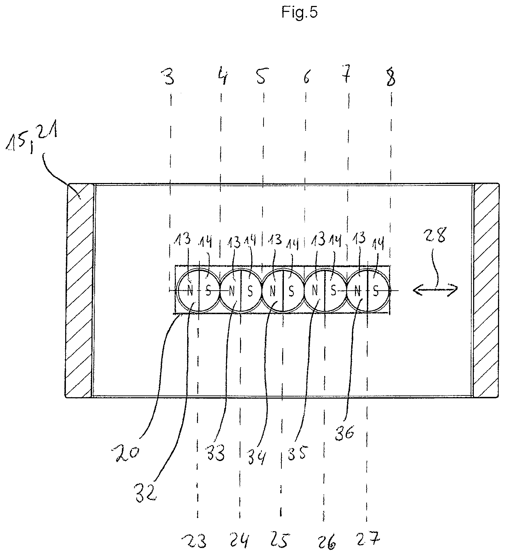

Die Figuren 1 bis 5 zeigen eine erfindungsgemäße Schaltvorrichtung 1 mit einem Betätigungselement 2, das entlang einer Schaltgasse 9 in einer Betätigungsrichtung 28 hin und her bewegt werden kann, um mittels einer darin vorgesehenen Elektronikeinheit 22 ein Fahrstufenwechselsignal zum Einstellen einer Fahrstufe in einem Kraftfahrzeug zu erzeugen. Die Schaltgasse 9 ist durch eine gestrichelte Linie angedeutet. Die Schaltvorrichtung 1 wird beispielsweise in der Mittelkonsole eines Kraftfahrzeugs, bspw. in Fahrtrichtung vor einer Mittelarmlehne verbaut, so dass ein Fahrzeugführer das Betätigungselement 2 bzw. einen damit verbundenen Griff oder Bedienstein 37 ergreifen kann und durch vor- bzw. zurückbewegen des Betätigungselementes 2 entlang der Schaltgasse 9 einen Wechselwunsch der Fahrstufe eingeben kann.

Die Schaltgasse 9 kann Teil einer nicht dargestellten Schaltkulisse mit mehreren Schaltgassen 9 sein, welche parallel und/oder quer zu einander verlaufen können. Das Betätigungselement 2 kann zum Anwählen unterschiedlicher Fahrstufen oder zum Auslösen unterschiedlicher Fahrstufenwechsel in diese Schaltgassen 9 geführt und darin bewegt werden. Im vorliegenden Beispiel wird die Erfindung anhand einer einfachen Schaltkulisse mit einer einzigen Schaltgasse 9 erläutert. Die Erfindung ist jedoch nicht zwingend darauf beschränkt.

Die hier im Rahmen der Erfindung beschriebenen Schaltvorrichtungen 1 sind so genannte "Shift-by-wire"-Schaltvorrichtungen 1, bei welchen unterschiedliche Fahrstufenwechselsignale auf Grund der Positionsänderung des Betätigungselementes 2 an ein Steuergerät 31 des Kraftfahrzeugs bzw. eines Getriebes des Kraftfahrzeuges gesendet werden, um einen entsprechenden Fahrstufenwechsel zu bewirken, wobei auf eine direkte mechanische Verbindung zwischen der Schaltvorrichtung 1 und dem Antriebsstrang des Kraftfahrzeugs bewusst verzichtet wird.

Um dem Fahrzeugführer die Erzeugung von Fahrstufenwechselsignalen ohne eine Inaugenscheinnahme der Schaltvorrichtung 1, also allein auf Grund seiner haptischen Empfindung zu ermöglichen, ist eine Haptikeinrichtung 10 vorgesehen. Die Haptikeinrichtung 10 dient der Erzeugung bzw. Nachbildung von Rückstell- bzw. Widerstandskräften R, die der Fahrzeugführer bei der Bewegung des Betätigungselementes spürt. Die Rückstell- bzw. Widerstandskräfte R sind einer Betätigungskraft F, die der Fahrzeugführer auf das Betätigungselement 2 ausübt, entgegengesetzt. Die durch die Haptikeinrichtung 10 erzeugten Rückstell- bzw. Widerstandskräfte R können beispielsweise Rückstell- bzw. Widerstandskräften R nachempfunden werden, die dem Fahrzeugführer aus herkömmlichen, mechanischen Schalteinrichtungen und Schaltsträngen bei einem Fahrstufenwechsel bekannt sind. Der Fahrzeugführer erhält somit eine unmittelbare, haptisch empfindbare Rückmeldung über seine Eingabe an der Schaltvorrichtung 1, so dass eine Überprüfung seiner Eingabe an einer Anzeige bzw. eine visuelle Überprüfung einer Schaltposition 3, 4, 5, 6, 7, 8, 23, 24, 25, 26, 27 des Betätigungselementes 2 in der Regel entfallen kann.

Die Haptikeinrichtung 10 weist im vorliegende Fall einen an dem Betätigungselement 2 angeordneten ersten Magneten 12 auf, der in ein Ende des Betätigungselementes 2 eingelassen ist, welches einem Lagerbock 15 der Schaltvorrichtung 1 zugewandt ist. Der Lagerbock 15 bildet den feststehenden Teil 21 der Schaltvorrichtung 1, welcher in der Regel ortsfest an dem Kraftfahrzeug angeordnet wird. Als feststehender Teil 21 ist derjenige Teil der Schaltvorrichtung 1 zu verstehen, bezüglich dessen sich das Betätigungselement 2 durch den Benutzer zum Erzeugen eines Fahrstufenwechselsignals auslenken lässt.

In dem feststehenden Teil 21, hier in dem Lagerbock 15, ist eine aus mehreren Magneten 32, 33, 34, 35, 36 bestehende Magnetleiste 20 angeordnet, die ein magnetisch wechselwirkendes erstes Gegenelement zu dem in dem Betätigungselement 2 angeordneten ersten Magneten 12 bildet. Dabei sind im vorliegenden Fall jeweils die entgegengesetzte Nordpole 13 und Südpole 14 der einzelnen Magneten 32, 33, 34, 35, 36, 12 abwechselnd in der Bewegungsrichtung 28 ausgerichtet. Das bedeutet, dass die Nordpole 13 und die Südpole 14 der Magneten 32, 33, 34, 35, 36, 12 so ausgerichtet sind, dass sie in der Bewegungsrichtung 28 abwechselnd aufeinander folgen.

Das Betätigungselement 2 ist mittels Lagerbuchsen 18 an Lagerstäben 17 linear verschieblich geführt, wobei die Lagerstäbe 17 von dem Lagerbock 15 festgelegt sind. Im vorliegenden Beispiel lässt sich der erste Magnet 12 in dem Betätigungselement 2 in unterschiedliche Schaltpositionen 3, 4, 5, 6, 7, 8 verschieben, in welchen der Nordpol 13 des ersten Magneten 12 in dem Betätigungselement 2 mit einem der Südpole 14 der Magneten 32, 33, 34, 35, 36 in Deckung kommt und so sechs unterschiedliche Schaltpositionen 3, 4, 5, 6, 7, 8 annehmen kann. Die haptische Rückmeldung an den Fahrzeugführer erfolgt durch die Wechselwirkung der Magnetfelder des ersten Magneten 12 mit den Magnetfeldern der diesem gegenüberliegenden Magneten 32, 33, 34, 35, 36.

In den Schaltpositionen 3, 4, 5, 6, 7, 8 ziehen sich jeweils die Nord- und Südpole 13, 14 der sich gegenüberliegenden Magneten an dem Betätigungselement 2 und dem feststehenden Teil 21 an, so dass dem Fahrzeugführer die eingelegte Schaltposition zurückgemeldet wird. In diesen Stellungen halten die Anziehungskräfte das Betätigungselement 2 in der jeweiligen Schaltstellung 3, 4, 5, 6, 7, 8. Lenkt der Fahrzeugführer das Betätigungselement 2 aus einer dieser Schaltpositionen 3, 4, 5, 6, 7, 8 in der Betätigungsrichtung 28 aus, so nähert sich der Nordpol 13 des ersten Magneten 12 einem der Nordpole 13 der Magneten 32, 33, 34, 35, 36. Gleiches gilt für die jeweiligen Südpole 14. Auf Grund der zwischen gleichsinnigen Magnetpolen auftretenden Abstoßungskräfte kommt es zu einer in Bewegungsrichtung 28 resultierenden Rückstell- bzw. Widerstandskraft R, die der Fahrzeugführer als einen zu überwindenden und seiner Betätigungskraft F entgegengesetzten Betätigungswiderstand empfindet.

Die Schaltvorrichtung 1 weist zusätzlich eine Rückstelleinrichtung in Form von Rückstellfedern 16 auf, die zwischen dem Lagerbock 15 und den jeweiligen Lagerbuchsen 18 des Betätigungselementes 2 eingespannt sind. Im vorliegenden Beispiel ist die Schaltvorrichtung 1 monostabil ausgelegt. Das bedeutet, dass bei einer Auslenkung des Betätigungselementes 2 aus einer Mittelstellung, bspw. Schaltposition 5, die entsprechenden Rückstellfedern 16 gespannt werden, und das Betätigungselement 2 beim Loslassen selbsttätig in diese Mittelstellung zurückfällt. Dabei überlagern sich die Rückstell- bzw. Widerstandskräfte R der Haptikeinrichtung 10 und die durch die Rückstelleinrichtung erzeugte Rückstellkraft R. In den Schaltpositionen 3, 4, 5, 6, 7, 8 liegen an dem Betätigungselement 2 dann einerseits durch die Anziehungskräfte zwischen den gegensinnigen Nord-und Südpolen 13, 14 Haltekräfte und andererseits die Rückstellkraft R der Rückstelleinrichtung an, die in einem lokalen Kraftminimum resultieren. Bei möglichen Endstellungen der äußeren Schaltpositionen 3 und 8 kommt jeweils nur einer der magnetischen Pole mit dem jeweiligen anderen magnetischen Gegenpol in Deckung.

Um eine zuverlässige Rückstellung in die monostabile Schaltposition 5 zu gewährleisten, sind die Rückstellfedern 16 so ausgelegt, dass die Rückstellkraft R der Rückstelleinrichtung bereits in der ersten, zur monostabilen Schaltposition 5 benachbarten Schaltposition 4, 6 größer ist, als die magnetische Haltekraft der Haptikeinrichtung 10.

Die Vorrichtung kann jedoch bei Weglassen der Rückstellfedern 16 auch als "multistabile" Schaltvorrichtung 1 ausgelegt werden, so dass das Betätigungselement 2 beim Loslassen durch den Benutzer in der entsprechenden Schaltposition verharrt bzw. auf Grund der zwischen den Magneten 12, 32, 33, 34, 35, 36 auftretenden Anziehungs- bzw. Abstoßungskräfte in die nächstgelegene, stabile Schaltposition 3, 4, 5, 6, 7, 8 gelangt.

Denkbar ist auch, die Rückstellfedern 16 zu verkürzen bzw. durch Schenkelfedern zu ersetzen, die eine selbsttätige Rückstellung des Betätigungselementes 2 nur aus bestimmten, bspw. den äußeren Schaltpositionen 3, 8, in die weiter innen liegenden Schaltpositionen 4, 7 bewirken.

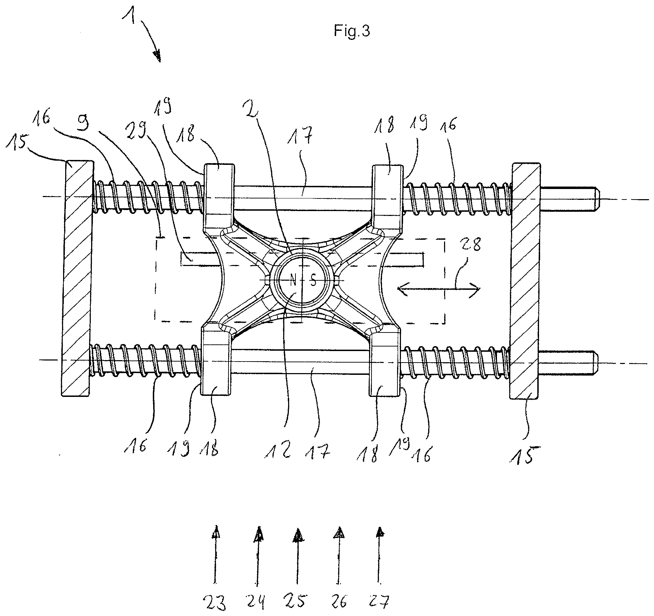

In einer möglichen Alternative zu dem in den Figuren 1 bis 5 gezeigten Aufbau ist der in der Figur 3 eingezeichnete erste Magnet 12 in dem Betätigungselement 2 in der Zeichnungsebene der Figur 3 um 180 ° verdreht eingebaut. Auf diese Weise liegen nicht mehr die Schaltpositionen 6 bis 8, sondern die alternativen Schaltpositionen 23 bis 27 vor, bei welchen der erste Magnet 12 des Betätigungselementes 2 jeweils mit dem Südpol 14 eines Magneten 32, 33, 34, 35, 36 und der Südpol 14 des ersten Magneten 12 mit dem jeweiligen Nordpol eines Magneten 32, 33, 34, 35, 36 des ersten Gegenelementes in Deckung kommt.

Auf diese Weise lässt sich die vorliegende Schaltvorrichtung 1 mit der minimalen Änderung in der Einbaulage des Magneten 12 von möglichen sechs Schaltpositionen 3 bis 8 auf fünf mögliche Schaltpositionen 23 bis 27 umrüsten, ohne eine weitere Änderung vornehmen zu müssen.

Sofern die Schaltpositionen 3 bis 8 auf Grund der nur teilweisen Überdeckung der Magnete 12 und 32 bzw. 12 und 36 nicht erwünscht sind, kann eine Beschränkung auf nur vier Schaltpositionen, nämlich die Schaltpositionen 4 bis 7 durch das Vorsehen von mechanischen Anschlägen entlang der Lagerstäbe 17 erfolgen. Um die Bewegung des Betätigungselementes 2 zwischen den Schaltpositionen für einen möglichst hochwertigen Qualitätseindruck zu dämpfen, kann an der jeweiligen Lagerbuchse 18 zusätzlich noch ein Dämpfungselement 19 angeordnet werden, welches auf den Lagerstäben 17 gleitet und ein mögliches Ein- bzw. Überschwingen zu vermindern.

Zum Auslesen der jeweiligen Schaltpositionen 3 bis 8 bzw. 24 bis 27 ist die Schaltvorrichtung 1 mit einer Sensorik versehen, welche die Position des Betätigungselementes 2 entlang der Bewegungsrichtung 28 auswertet. Im vorliegenden Beispiel wird eine Sensorik verwendet, die die in der Schaltvorrichtung 1 auftretenden, veränderlichen Magnetfelder auswertet, so dass beispielsweise der auf dem Betätigungselement 2 vorgesehene erste Magnet 12 durch eine auf dem Lagerbock 15 angeordnete Sensoranordnung 29 ausgelesen wird. Alternativ dazu kann auch auf dem Betätigungselement 2 ein Magnetsensor 11 vorgesehen sein, welcher anhand der auf ihn wirkenden Magnetfelder der Magneten 32 bis 36 die Position des Betätigungselementes 2 ermittelt.

Die in der Schaltvorrichtung 1 vorgesehene Elektronikeinheit 22 wertet die Daten der Sensorik aus und erzeugt ein Fahrstufenwechselsignal, welches an das Steuergerät 31 des Kraftfahrzeugs bzw. des Kraftfahrzeuggetriebes weitergegeben wird. Gleichzeitig kann die Elektronikeinheit 22 auch Signale von dem Steuergerät 31 empfangen, beispielsweise eine Bestätigung und/oder Fehlersignale, die einen erfolgten oder auch einen nicht möglichen Fahrstufenwechsel signalisieren. An der Schaltvorrichtung 1 kann zusätzlich eine Anzeige 30 vorgesehen sein, welche dem Fahrzeugführer eine optische Rückmeldung über die jeweils eingelegte Fahrstufe oder über einen gewünschten oder nicht erfolgten Fahrstufenwechsel signalisiert. Beispielsweise können die entsprechenden Fahrstufen mit jeweils einer zugeordneten Leuchte verknüpft sein, die bei eingelegter Fahrstufe entsprechend aufleuchten und dazu von der Elektronikeinheit 22 angesteuert werden.

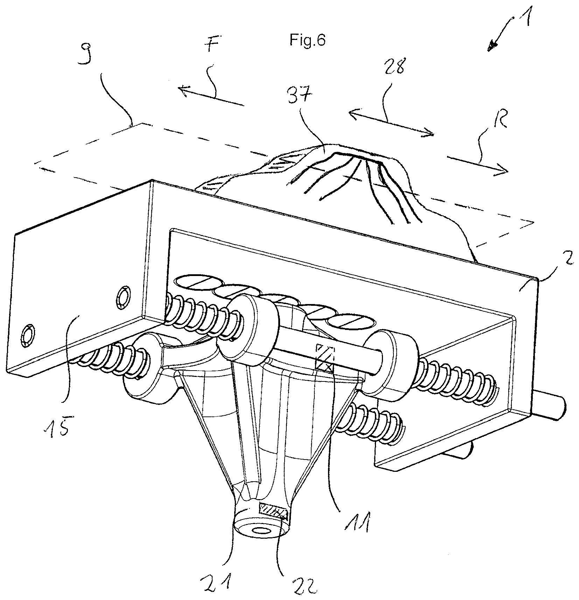

In der Figur 6 wird ein zweites Ausführungsbeispiel einer erfindungsgemäßen Schaltvorrichtung 1 gezeigt. Diese unterscheidet sich von der Schaltvorrichtung 1 gemäß den Figuren 1 bis 5 darin, dass der Lagerbock 15 den beweglichen Teil der Schaltvorrichtung 1 bildet, auf welchem ein Bedienstein 37 angeordnet ist. Dieser kann von dem Benutzer ergriffen und betätigt werden. In diesem Ausführungsbeispiel ist es besonders sinnvoll, den Magnetsensor 11 an dem feststehenden Teil 21 vorzusehen, so dass die entlang der Bewegungsrichtung 28 beweglichen Komponenten der Schaltvorrichtung 1 keine elektrische Kontaktierung benötigen.

Abweichend von den vorliegend beschriebenen Ausführungsbeispielen mit einer linearen Führung durch Lagerstäbe 17 und Lagerbuchsen 18 kann auch eine Schwenkführung für das Betätigungselement 2 vorgesehen sein, bei welcher ein Betätigungshebel um eine Schwenkachse schwenkbar ist und ein dem feststehenden Teil 21 zugewandtes Ende des Betätigungshebels beispielsweise einen Permanentmagneten 12 aufweist, der mit einer ähnlichen Magnetleiste 20 in Wechselwirkung tritt.

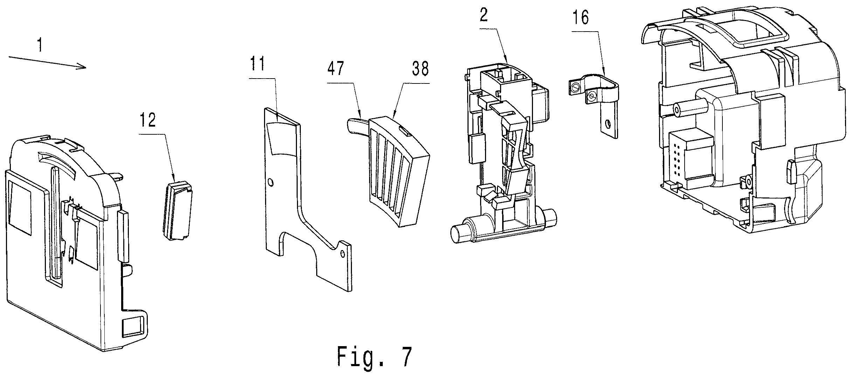

Aus Figur 7 geht eine weitere Ausführungsform der erfindungsgemäßen Schaltvorrichtung 1 hervor, wobei das erste Gegenelement für die magnetische Kopplung mit dem ersten Magneten 12 als Rastierkontur 38 mit ferromagnetischen Eigenschaften ausgebildet ist. Bei einer solchen magnetischen Rastierkontur wird die Haptik im Gegensatz zu Konturen, bei welchen die Haptik mechanisch umgesetzt wird, rein magnetisch und somit verschleißfrei umgesetzt. Vorzugsweise kann die magnetische Rastierkontur 38 aus Stahl hergestellt sein. Vorliegend weist die Rastierkontur 38 gemäß Figur 7 eine etwa ringsegmentförmige Form mit mehreren Öffnungen auf, so dass eine Schwenkbewegung des Betätigungselements 2 möglich ist. Die Rastierkontur 38 ist mit dem Betätigungselement 2 gekoppelt, so dass diese sich bei einer Betätigung des Betätigungselements 2 entsprechend mitbewegt. Aufgrund dieser Bewegung ändert sich die relative Lage bezüglich des gegenüber dem Betätigungselement 2 feststehenden ersten Magneten 12, so dass sich resultierend daraus auch das durch den ersten Magneten 12 und die ferromagnetische Rastierkontur 38 gebildete Magnetfeld ändert. Auf diese Weise werden die Schaltpositionen 3, 4, 5, 6, 7, 8 durch das resultierende Magnetfeld nachempfunden.

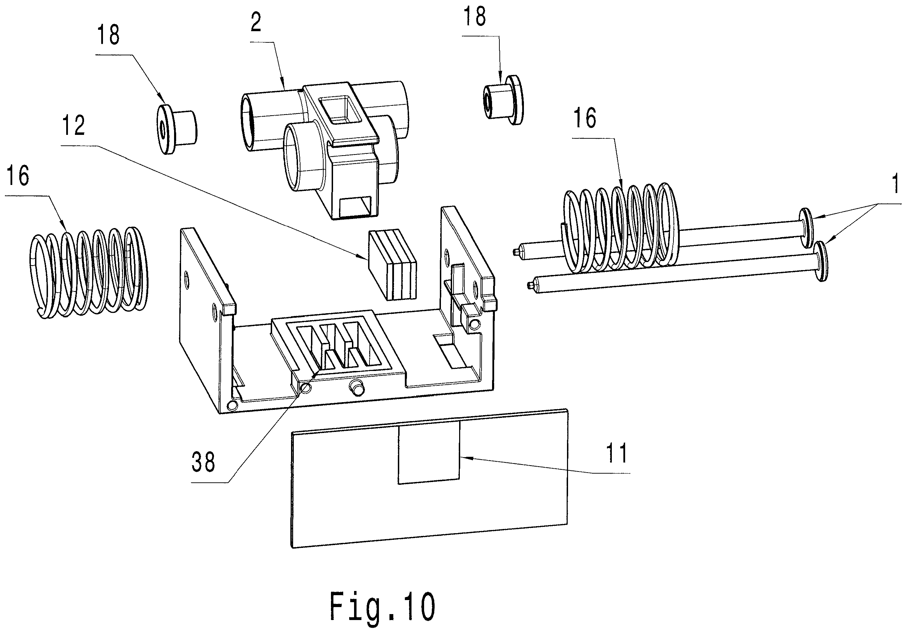

Wie aus Figur 10 hervorgeht, kann die Rastierkontur 38 alternativ derart ausgestaltet sein, dass eine lineare Bewegung des Betätigungselementes 2 gewährleistet wird. Hierzu weist die Rastierkontur 38 etwa parallel zueinander ausgebildete Öffnungen auf, mittels welcher das aus erstem Magnet 12 und der ferromagnetischen Rastierkontur 38 gebildete resultierende Magnetfeld gebildet wird. Auch auf diese Weise werden die Schaltpositionen 3, 4, 5, 6, 7, 8 durch das resultierende Magnetfeld nachempfunden.

Wie auch im ersten Ausführungsbeispiel lässt sich vorliegend der an dem Betätigungselement 2 angekoppelte erste Magnet 12 in unterschiedliche Schaltpositionen 3, 4, 5, 6, 7, 8 verschieben. Die haptische Rückmeldung an den Fahrzeugführer erfolgt durch die entsprechenden Magnetfelder, welche durch die relative Position des ersten Magneten 12 gegenüber der Rastierkontur 38 gebildet werden.

In dem Ausführungsbeispiel gemäß Figur 7 ist der Magnetfeldsensor 11 an einem gegenüber dem Betätigungselement 2 ortsfesten bzw. feststehenden Teil der Schaltvorrichtung 1 gekoppelt, insbesondere daran befestigt. Vorliegend weist die Rastierkontur 38 eine Lasche 47 mit ferromagnetischen Eigenschaften auf, so dass dadurch eine induktive Positionserkennung des Betätigungselementes 2 möglich ist.

Wie aus den Figuren 8 und 9 erfindungsgemäß hervorgeht, weist die Rückstelleinrichtung wenigstens einen zweiten Magneten 39, insbesondere einen oder mehrere Permanentmagnete oder Elektromagnete, und wenigstens ein mit dem oder den zweiten Magneten 39 magnetisch koppelbares zweites Gegenelement 40 zum selbsttätigen Rückstellen des Betätigungselementes 2 in eine Schaltposition 25 auf.

Ferner ist den Figuren 8 und 9 ein erster 41 und ein zweiter Satz 42 von jeweils im Wesentlichen nebeneinander angeordneten zweiten Magneten 39 zu entnehmen. Der erste 41 und der zweite Satz 42 sind in Montagestellung übereinander angeordnet, wobei die Magnetfelder der beiden Sätze 41, 42 derart miteinander wechselwirken, dass der eine Satz 41 gegenüber dem anderen Satz 42 zum selbsttätigen Rückstellen des Betätigungselementes 2 in diese Schaltposition 25 magnetisch verschiebbar ist.

Die zweiten Magnete 39 bzw. der erste 41 und/oder der zweite Satz 42 von zweiten Magneten 39 sind vorliegend jeweils in einer Aufnahme 45, 46 aufgenommen. Die Magnetfelder des ersten 41 und zweiten Satzes 42 werden jeweils durch eine ferromagnetische Platte 43, 44, insbesondere durch eine Stahlplatte verstärkt.

Die magnetische Rückstelleinrichtung ist in einer "Sandwichbauweise" aufgebaut. In Montagestellung ist der erste Satz 41 auf der ersten Platte 43 zur Verstärkung angeordnet, wobei der erste Satz 42 in einer ersten Aufnahme 45 zur Bildung einer ersten Unterbaugruppe gehalten ist. Der zweite Satz 42 ist mit zweiter Platte 44 in einer zweiten Aufnahme 46 gehalten und bildet eine zweite Unterbaugruppe. Beide Unterbaugruppen sind vorliegend übereinander in Sandwichbauweise angeordnet, wie aus Figur 8 hervorgeht.

Aus Figuren 8 und 9 ist ebenfalls auch die Haptikeinrichtung 10, vorliegend anstatt mit dem ersten Magneten 12 gemäß der ersten Ausführungsform mit mehreren ersten Magneten 48, 49, 50, 51 und dem mit den ersten Magneten 48, 49, 50, 51 magnetisch koppelbaren ersten Gegenelement ersichtlich, welches vorliegend ebenfalls als Magnet 32, 33, 34, 35, 36, 52, 53, 54 ausgebildet ist.

Figur 9 zeigt die Schaltvorrichtung 1 mit Haptikeinrichtung 10 und magnetischer Rückstelleinrichtung mit den Magneten 39, 40, 41, 42 in verschiedenen Positionen. Figur 9 c)zeigt eine mittlere Position "X" des Betätigungselements 2, die Figuren 9 a) und b) jeweils eine nach links und Figuren 9 d) und e) eine nach rechts ausgelenkte Position des Betätigungselementes 2.

**Bezugszeichenliste**

| | | | |
|---|---|---|---|
| 1 | Schaltvorrichtung | 29 | Sensoranordnung |
| 2 | Betätigungselement | 30 | Anzeige |
| 3 | Schaltposition | 31 | Steuergerät |
| 4 | Schaltposition | 32 | Magnet (erstes Gegenelement) |
| 5 | Schaltposition | 33 | Magnet (erstes Gegenelement) |
| 6 | Schaltposition | 34 | Magnet (erstes Gegenelement) |
| 7 | Schaltposition | 35 | Magnet (erstes Gegenelement) |
| 8 | Schaltposition | 36 | Magnet (erstes Gegenelement) |
| 9 | Schaltgasse | 37 | Bedienstein |
| 10 | Haptikeinrichtung | 38 | magnetische Rastierkontur |
| 11 | Sensor | 39 | zweiter Magnet |
| 12 | erster Magnet (Betätigungselement) | 40 | Magnet (zweites Gegenelement) |
| 13 | Nordpol | 41 | erster Satz Magnete |
| 14 | Südpol | 42 | zweiter Satz Magnete |
| 15 | Lagerbock | 43 | Magnetverstärker |
| 16 | Rückstellfeder | 44 | Magnetverstärker |
| 17 | Lagerstab | 45 | Magnetaufnahme |
| 18 | Lagerbuchse | 46 | Magnetaufnahme |
| 19 | Dämpfungselement | 47 | Lasche |
| 20 | Magnetleiste | 48 | erster Magnet (Betätigungselement) |
| 21 | feststehender Teil | 49 | erster Magnet (Betätigungselement) |
| 22 | Elektronikeinheit | 50 | erster Magnet (Betätigungselement) |
| 23 | Schaltposition | 51 | erster Magnet (Betätigungselement) |
| 24 | Schaltposition | 52 | Magnet (erstes Gegenelement) |
| 25 | Schaltposition | 53 | Magnet (erstes Gegenelement) |
| 26 | Schaltposition | | |
| 27 | Schaltposition | | |
| 28 | Betätigungsrichtung | | |
| 54 | Magnet (erstes Gegenelement) | | |
| | | F | Betätigungskraft |
| | | R | Rückstellkraft |

## Patentansprüche

1. Schaltvorrichtung (1) zum Anwählen unterschiedlicher Fahrstufen eines Kraftfahrzeugs, mit einem Betätigungselement (2), das in wenigstens einer Betätigungsrichtung (28) entlang wenigstens einer Schaltgasse (9) zwischen wenigstens zwei, den Fahrstufen zugeordneten Schaltpositionen (3, 4, 5, 6, 7, 8, 23, 24, 25, 26, 27) beweglich geführt ist, wobei das Betätigungselement (2) mit einer Haptikeinrichtung (10) gekoppelt ist, mittels welcher eine auf das Betätigungselement (2) wirkende Rückstellkraft (R) erzeugbar ist, die einer auf das Betätigungselement (2) wirkenden Betätigungskraft (F) durch einen Benutzer zumindest zeitweise entgegengerichtet ist, wobei die Haptikeinrichtung (10) wenigstens einen ersten Magneten (12, 48, 49, 50, 51) und wenigstens ein mit dem ersten Magneten (12, 48, 49, 50, 51) magnetisch koppelbares erstes Gegenelement aufweist, wobei der wenigstens eine erste Magnet (12, 48, 49, 50, 51) und das wenigstens eine erste Gegenelement relativ zueinander beweglich sind, wobei ferner eine Rückstelleinrichtung zum selbsttätigen Rückstellen des Betätigungselementes (2) in eine Schaltposition (25) vorgesehen ist, **dadurch gekennzeichnet, dass** die Rückstelleinrichtung wenigstens einen zweiten Magneten (39) und wenigstens ein mit dem oder den zweiten Magneten (39) magnetisch koppelbares Gegenelement (40) zum selbsttätigen Rückstellen des Betätigungselementes (2) in diese Schaltposition (25) aufweist, wobei für die besagte Rückstelleinrichtung wenigstens ein erster (41) und zweiter Satz (42) von jeweils in Montagestellung im Wesentlichen nebeneinander angeordneten zweiten Magneten (39) vorgesehen sind, wobei der besagte zweite Satz das magnetisch koppelbare Gegenelement (40) darstellt und wobei der wenigstens erste (41) und der wenigstens zweite Satz (42) in besagter Montagestellung übereinander angeordnet sind und die Magnetfelder der beiden Sätze (41, 42) derart miteinander wechselwirken, dass der eine Satz (41) gegenüber dem anderen Satz (42) zum selbsttätigen Rückstellen des Betätigungselementes (2) in diese Schaltposition (25) magnetisch verschiebbar ist.

2. Schaltvorrichtung (1) nach Anspruch 1, **dadurch gekennzeichnet, dass** das erste Gegenelement für die magnetische Kopplung mit dem ersten Magneten (12, 48, 49, 50, 51) ebenfalls als Magnet (32, 33, 34, 35, 36, 52, 53, 54) oder als Rastierkontur (38) mit ferromagnetischen Eigenschaften ausgebildet ist.

3. Schaltvorrichtung (1) nach Anspruch 2, **dadurch gekennzeichnet, dass** sich in einer Schaltposition (3, 4, 5, 6, 7, 8, 23, 24, 25, 26, 27) jeweils wenigstens ein Nordpol (13) bzw. Südpol (24) des ersten Magneten (12, 48, 49, 50, 51) und ein Südpol (14) bzw. Nordpol (13) des als Magneten (32, 33, 34, 35, 36, 52, 53, 54) ausgebildeten ersten Gegenelements gegenüberliegen.

4. Schaltvorrichtung (1) nach Anspruch 2, **dadurch gekennzeichnet, dass** sich in einer Schaltposition (3, 4, 5, 6, 7, 8, 23, 24, 25, 26, 27) der Nordpol (13) des ersten Magneten (12, 48, 49, 50, 51) und der Südpol (14) eines als Magneten (32, 33, 34, 35, 36, 52, 53, 54) ausgebildeten ersten Gegenelements und der Südpol (14) des ersten Magneten (12, 48, 49, 50, 51) und der Nordpol (13) eines als Magneten (32, 33, 34, 35, 36, 52, 53, 54) ausgebildeten ersten Gegenelements gegenüberliegen.

5. Schaltvorrichtung (1) nach einem der vorhergehenden Ansprüche, **dadurch gekennzeichnet, dass** der oder die erste bzw. ersten Magnete (12, 48, 49, 50, 51) wenigstens teilweise als Permanentmagneten oder -magnete oder als Elektromagnet oder -magnete ausgebildet ist oder sind.

6. Schaltvorrichtung (1) nach einem der vorhergehenden Ansprüche, **dadurch gekennzeichnet, dass** jeder Schaltposition (3, 4, 5, 6, 7, 8, 23, 24, 25, 26, 27) wenigstens eine Fahrstufe oder ein Fahrstufenwechsel des Kraftfahrzeugs zugeordnet ist und Mittel zur elektrischen Kopplung mit einem Kraftfahrzeuggetriebe und/oder einer Kraftfahrzeugsteuerung, insbesondere einen elektrischen Signalerzeuger zur elektrischen Kopplung vorgesehen sind.

7. Schaltvorrichtung (1) nach einem der vorhergehenden Ansprüche, **dadurch gekennzeichnet, dass** wenigstens ein mit dem ersten Magneten (12, 48, 49, 50, 51) oder dem als magnetische Rastierkontur (38) ausgebildeten ersten Gegenelement zusammenwirkender Magnetfeldsensor (11) vorgesehen ist, mittels welchem wenigstens eine Schaltposition (3, 4, 5, 6, 7, 8, 23, 24, 25, 26, 27) ermittelbar ist.

8. Schaltvorrichtung (1) nach Anspruch 7, **dadurch gekennzeichnet, dass** der Magnetfeldsensor (11) mit dem Betätigungselement (2) oder an einem gegenüber dem Betätigungselement (2) ortsfesten Teil der Schaltvorrichtung gekoppelt, insbesondere daran befestigt ist.

9. Schaltvorrichtung (1) nach einem der Ansprüche 1 bis 8, **dadurch gekennzeichnet, dass** das Betätigungselement (2) ein entlang der Schaltgasse linear geführter Schieber oder schwenkbar geführter Schalthebel ist.

10. Schaltvorrichtung (1) nach Anspruch 1, **dadurch gekennzeichnet, dass** die Rückstelleinrichtung zum Rückstellen des Betätigungselementes (2) in eine monostabile Schaltposition (25) vorgesehen ist.

11. Schaltvorrichtung (1) nach einem der Ansprüche 1 bis 9, **dadurch gekennzeichnet, dass** die Haptikeinrichtung (10) das Betätigungselement (2) mittels magnetischer Anziehungskraft in der eingelegten Schaltposition (3, 4, 5, 6, 7, 8, 23, 24, 25, 26, 27) hält.

12. Schaltvorrichtung (1) nach einem der vorhergehenden Ansprüche, **dadurch gekennzeichnet, dass** der erste Magnet (12) an dem Betätigungselement (2) angeordnet ist und eine Anordnung aus ersten Gegenelementen oder ersten Magneten (12, 48, 49, 50, 51) in einem gegenüber dem Betätigungselement (2) feststehenden Teil der Schaltvorrichtung (1) angeordnet sind oder dass das erste Gegenelement an dem Betätigungselement (2) angeordnet ist und eine Anordnung aus ersten Magneten (12, 48, 49, 50, 51) in einem gegenüber dem Betätigungselement (2) feststehenden Teil (21) der Schaltvorrichtung (1) angeordnet ist.

## Claims

1. Shifting device (1) for selecting different driving positions of a motor vehicle, having an activation element (2) which is guided so as to be movable in at least one activation direction (28) along at least one shifting gate (9) between at least two shifting positions (3, 4, 5, 6, 7, 8, 23, 24, 25, 26, 27) that are assigned to the driving positions, wherein the activation element (2) is coupled to a tactile installation (10) by means of which a restoring force (R) which acts on the activation element (2) and is at least temporarily directed counter to an activation force (F) acting via a user on the activation element (2) is able to be generated, wherein the tactile installation (10) has at least one first magnet (12, 48, 49, 50, 51) and at least one first counterpart which is able to be magnetically coupled to the first magnet (12, 48, 49, 50, 51), wherein the at least one first magnet (12, 48, 49, 50, 51) and the at least one first counterpart are movable relative to one another, wherein a restoring installation for restoring the activation element (2) in a self-acting manner to a shifting position (25) is furthermore provided, **characterized in that** the restoring installation has at least one second magnet (39) and at least one counterpart (40) which for restoring the activation element (2) in a self-acting manner to this shifting position (25) is able to be magnetically coupled to the, or the second, magnet (39), wherein at least a first (41) and a second set (42) of second magnets (39) which in the assembled position are in each case disposed so as to be substantially next to one another are provided for said restoring installation, wherein said second set represents the magnetically couplable counterpart (40), and wherein the at least first (41) and the at least second set (42) in said assembled position are disposed on top of one another and the magnetic fields of the two sets (41, 42) mutually interact in such a manner that the one set (41) for restoring the activation element (2) in a self-acting manner to this shifting position (25) is magnetically displaceable in relation to the other set (42).

2. Shifting device (1) according to Claim 1, **characterized in that** the first counterpart for the magnetic coupling to the first magnet (12, 48, 49, 50, 51) is likewise configured as a magnet (32, 33, 34, 35, 36, 52, 53, 54) or as a latching contour (38) having ferromagnetic properties.

3. Shifting device (1) according to Claim 2, **characterized in that** in a shifting position (3, 4, 5, 6, 7, 8, 23, 24, 25, 26, 27) at least one north pole (13) or south pole (24) of the first magnet (12, 48, 49, 50, 51), respectively, and one south pole (14) or north pole (13) of the first counterpart configured as a magnet (32, 33, 34, 35, 36, 52, 53, 54), respectively, lie opposite one another.

4. Shifting device (1) according to Claim 2, **characterized in that** in a shifting position (3, 4, 5, 6, 7, 8, 23, 24, 25, 26, 27) the north pole (13) of the first magnet (12, 48, 49, 50, 51) and the south pole (14) of a first counterpart configured as a magnet (32, 33, 34, 35, 36, 52, 53, 54), and the south pole (14) of the first magnet (12, 48, 49, 50, 51) and the north pole (13) of a first counterpart configured as a magnet (32, 33, 34, 35, 36, 52, 53, 54) lie opposite one another.

5. Shifting device (1) according to one of the preceding claims, **characterized in that** the, or the first, magnet or magnets (12, 48, 49, 50, 51), respectively, is or are at least in part configured as a permanent magnet or magnets, respectively, or as an electromagnet or electromagnets, respectively.

6. Shifting device (1) according to one of the preceding claims, **characterized in that** each shifting position (3, 4, 5, 6, 7, 8, 23, 24, 25, 26, 27) is assigned at least one driving position or a driving position change of the motor vehicle, and means for electrically coupling to a motor vehicle transmission and/or a motor vehicle controller, in particular an electric signal generator for the electric coupling are provided.

7. Shifting device (1) according to one of the preceding claims, **characterized in that** at least one magnetic field sensor (11) which interacts with the first magnet (12, 48, 49, 50, 51) or the first counterpart configured as the magnetic latching contour (38), and by way of which at least one shifting position (3, 4, 5, 6, 7, 8, 23, 24, 25, 26, 27) is able to be determined is provided.

8. Shifting device (1) according to Claim 7, **characterized in that** the magnetic field sensor (11) is coupled, in particular fastened, to the activation element (2) or to a part of the shifting device that is stationary in relation to the activation element (2).

9. Shifting device (1) according to one of Claims 1 to 8, **characterized in that** the activation element (2) is a slide guided in a linear manner along the shifting gate, or a pivotably guided shift lever.

10. Shifting device (1) according to Claim 1, **characterized in that** the restoring installation is provided for restoring the activation element (2) to a monostable shifting position (25).

11. Shifting device (1) according to one of Claims 1 to 9, **characterized in that** the tactile installation (10) holds the activation element (2) in the set shifting position (3, 4, 5, 6, 7, 8, 23, 24, 25, 26, 27) by means of a magnetic pull.

12. Shifting device (1) according to one of the preceding claims, **characterized in that** the first magnet (12) is disposed on the activation element (2) and an assembly of first counterparts or first magnets (12, 48, 49, 50, 51) is disposed in a part of the shifting device (1) that is stationary in relation to the activation element (2), or **in that** the first counterpart is disposed on the activation element (2) and an assembly of first magnets (12, 48, 49, 50, 51) is disposed in a part (21) of the shifting device (1) that is stationary in relation to the activation element (2).

## Revendications

1. Dispositif de commutation (1) servant à sélectionner différents étages de boîte de vitesses d'un véhicule automobile, comportant un élément d'actionnement (2) qui est guidé de manière mobile dans au moins une direction d'actionnement (28) le long d'au moins une voie de commutation (9) entre au moins deux positions de commutation (3, 4, 5, 6, 7, 8, 23, 24, 25, 26, 27) associées aux étages de boîte de vitesses, l'élément d'actionnement (2) étant couplé à un dispositif haptique (10) au moyen duquel une force de rappel (R) agissant sur l'élément d'actionnement (2) peut être générée, laquelle est opposée au moins par intermittence, par un utilisateur, à une force d'actionnement (F) agissant sur l'élément d'actionnement (2), le dispositif haptique (10) comprenant au moins un premier aimant (12, 48, 49, 50, 51) et au moins un premier élément conjugué pouvant être couplé de manière magnétique au premier aimant (12, 48, 49, 50, 51), l'au moins un premier aimant (12, 48, 49, 50, 51) et l'au moins un premier élément conjugué étant mobiles l'un par rapport à l'autre, en outre un dispositif de rappel servant au rappel automatique de l'élément d'actionnement (2) dans une position de commutation (25) étant prévu, **caractérisé en ce que** le dispositif de rappel comprend au moins un deuxième aimant (39) et au moins un élément conjugué (40) pouvant être couplé de manière magnétique à l'aimant ou aux deuxièmes aimants (39) pour le rappel automatique de l'élément d'actionnement (2) dans cette position de commutation (25), au moins un premier (41) et un deuxième ensemble (42) de deuxièmes aimants (39) respectivement disposés sensiblement les uns à côté des autres dans la position de montage étant prévus pour ledit dispositif de rappel, ledit deuxième ensemble constituant l'élément conjugué (40) pouvant être couplé de manière magnétique et l'au moins un premier (41) et l'au moins un deuxième ensemble (42) étant disposés l'un au-dessus de l'autre dans ladite position de montage et les champs magnétiques des deux ensembles (41, 42) interagissant l'un avec l'autre de telle sorte que l'un des ensembles (41) est déplaçable de manière magnétique par rapport à l'autre ensemble (42) pour le rappel automatique de l'élément d'actionnement (2) dans cette position de commutation (25) .

2. Dispositif de commutation (1) selon la revendication 1, **caractérisé en ce que** le premier élément conjugué pour le couplage magnétique au premier aimant (12, 48, 49, 50, 51) est réalisé également sous forme d'aimant (32, 33, 34, 35, 36, 52, 53, 54) ou sous forme de contour d'encliquetage (38) présentant des propriétés ferromagnétiques.

3. Dispositif de commutation (1) selon la revendication 2, **caractérisé en ce que**, dans une position de commutation (3, 4, 5, 6, 7, 8, 23, 24, 25, 26, 27), respectivement au moins un pôle nord (13) ou un pôle sud (24) du premier aimant (12, 48, 49, 50, 51) et un pôle sud (14) ou un pôle nord (13) du premier élément conjugué réalisé sous forme d'aimants (32, 33, 34, 35, 36, 52, 53, 54) sont en regard.

4. Dispositif de commutation (1) selon la revendication 2, **caractérisé en ce que**, dans une position de commutation (3, 4, 5, 6, 7, 8, 23, 24, 25, 26, 27), le pôle nord (13) du premier aimant (12, 48, 49, 50, 51) et le pôle sud (14) d'un premier élément conjugué réalisé sous forme d'aimants (32, 33, 34, 35, 36, 52, 53, 54) et le pôle sud (14) du premier aimant (12, 48, 49, 50, 51) et le pôle nord (13) d'un premier élément conjugué réalisé sous forme d'aimants (32, 33, 34, 35, 36, 52, 53, 54) sont en regard.

5. Dispositif de commutation (1) selon l'une des revendications précédentes, **caractérisé en ce que** le premier ou les premiers aimant (s) (12, 48, 49, 50, 51) est ou sont réalisé(s) au moins partiellement sous forme d'aimant permanent ou d'aimants permanents ou sous forme d'électroaimant ou d'électroaimants.

6. Dispositif de commutation (1) selon l'une des revendications précédentes, **caractérisé en ce qu'**au moins un étage de boîte de vitesses ou un changement d'étage de boîte de vitesses du véhicule automobile est associé à chaque position de commutation (3, 4, 5, 6, 7, 8, 23, 24, 25, 26, 27) et des moyens de couplage électrique à une boîte de vitesses de véhicule automobile et/ou à une commande de véhicule automobile, en particulier un générateur de signaux électriques pour le couplage électrique sont prévus.

7. Dispositif de commutation (1) selon l'une des revendications précédentes, **caractérisé en ce qu'**au moins un capteur de champ magnétique (11) coopérant avec le premier aimant (12, 48, 49, 50, 51) ou le premier élément conjugué réalisé sous forme de contour d'encliquetage magnétique (38) est prévu, capteur au moyen duquel au moins une position de commutation (3, 4, 5, 6, 7, 8, 23, 24, 25, 26, 27) peut être déterminée.

8. Dispositif de commutation (1) selon la revendication 7, **caractérisé en ce que** le capteur de champ magnétique (11) est couplé, en particulier fixé, à l'élément d'actionnement (2) ou à une partie du dispositif de commutation qui est fixe par rapport à l'élément d'actionnement (2).

9. Dispositif de commutation (1) selon l'une des revendications 1 à 8, **caractérisé en ce que** l'élément d'actionnement (2) est un coulisseau guidé linéairement le long de la voie de commutation ou un levier de commutation guidé de manière pivotante.

10. Dispositif de commutation (1) selon la revendication 1, **caractérisé en ce que** le dispositif de rappel est prévu pour le rappel de l'élément d'actionnement (2) dans une position de commutation (25) monostable.

11. Dispositif de commutation (1) selon l'une des revendications 1 à 9, **caractérisé en ce que** le dispositif haptique (10) maintient l'élément d'actionnement (2) dans la position de commutation enclenchée (3, 4, 5, 6, 7, 8, 23, 24, 25, 26, 27) par une force d'attraction magnétique.

12. Dispositif de commutation (1) selon l'une des revendications précédentes, **caractérisé en ce que** le premier aimant (12) est disposé sur l'élément d'actionnement (2) et un agencement de premiers éléments conjugués ou de premiers aimants (12, 48, 49, 50, 51) est agencé dans une partie du dispositif de commutation (1) qui est fixe par rapport à l'élément d'actionnement (2) ou **en ce que** le premier élément conjugué est disposé sur l'élément d'actionnement (2) et un agencement de premiers aimants (12, 48, 49, 50, 51) est disposé dans une partie (21) du dispositif de commutation (1) qui est fixe par rapport à l'élément d'actionnement (2).
